# EUROPEAN PATENT APPLICATION

(11) **EP 4 749 515 A1**
(43) Date of publication of application: **27.05.2026**
(21) Application number: 25217345.5
(22) Date of filing: 20.11.2025
(51) Int. Cl.: G06K 7/10, H04W 4/80

(54) **METHOD AND TERMINAL FOR READING DATA FROM AN IDENTITY DOCUMENT WITH AN NFC CHIP**

(30) Priority: 20.11.2024 NL 2039125
(71) Applicant: Inverid B.V., 7511 JX Enschede (NL)
(72) Inventor: Oostdijk, Martijn Diederik, Enschede (NL); Van Wietmarschen, Tom Nicolaas, Enschede (NL); Liu, Fei, Enschede (NL)
(74) Representative: Dogio Patents B.V.

(57) **Abstract**

Method for a terminal, for reading data from an identity document (10, 20), wherein the identity document comprises an NFC chip which supports the READ BINARY command as defined in ISO/IEC 7816, the method comprising, by the terminal:
i) in arbitrary order:
- a step (310) comprising determining (312) a type of the identity document out of a plurality of identity document types which each comprise an NFC chip which supports the READ BINARY command, and based on the determined type of the identity document, determining (314) whether the NFC chip of the identity document supports extended length for the READ BINARY command and if so, determining (314), based on the determined type of the identity document, a preferred extended length for an Le field of the READ BINARY command APDU to be transmitted by the terminal to the NFC chip;
- a step (320) of carrying out access control with the NFC chip to obtain access to the NFC chip;

ii) after step i), if it is determined that the NFC chip supports extended length for the READ BINARY command:
a step (330) of reading data from a data group of the NFC-chip, by sending (332) a READ BINARY command APDU to the NFC chip and subsequently receiving (334) a corresponding response APDU, wherein a value of the Le field of the READ BINARY command APDU is based on the preferred extended length and is greater than 256 bytes and less than 65535 bytes.

## Description

### Field of the invention

The present invention relates to a method for a terminal for reading data from an identity document which is provided with a near-field communication (NFC) chip, wherein the method comprises receiving the data in a response APDU (R-APDU) which has an extended length. The invention further relates to a terminal for reading data from an identity document with an NFC chip, typically an NFC chip according to ISO/IEC 14443.

### Background of the invention

Identity documents, such as passports, ID cards and driver's licenses are often equipped with an NFC chip which is adapted for wireless exchange of information with a terminal that is provided with an NFC reader. The wireless exchange of information between the NFC reader of the terminal and the NFC chip of the identity document typically entails communicating using application protocol data units (APDU's) as defined in International standard ISO/IEC 7816, in particular ISO/IEC 7816-4:2013 and/or ISO/IEC 7816-4:2020.

For instance, European patent application EP 4 095 752 A1 describes that a processor of an IC card may transmit extended format support information, which indicates whether an extended support format is supported for each of several commands, to an IC processing apparatus. When the IC processing apparatus reads data from the IC card, it may transmit a READ BINARY command APDU to the IC card, and subsequently receive data therefrom a READ BINARY response APDU. However, reading data from a chip in this manner is susceptible to errors, which can result in a reduced speed with which data is read.

It is an object of the invention to provide a method and terminal which at least partially overcome this drawback.

### Summary of the invention

To this end, according to a first aspect the invention provides a method for a terminal, for reading data from an identity document, wherein the identity document comprises an NFC chip which supports the READ BINARY command as defined in ISO/IEC 7816, the method comprising, by the terminal: i) in arbitrary order: - determining a type of the identity document, and based on the determined type of the identity document, determining whether the NFC chip of the identity document supports extended length for the READ BINARY command and if so, determining, based on the determined type of the identity document, a preferred extended length for an Le field of the READ BINARY command APDU to be transmitted by the terminal to the NFC chip; - carrying out access control with the NFC chip to obtain access to the NFC chip; and ii) after step i), if it is determined that the NFC chip supports extended length for the READ BINARY command: reading data from a data group of the NFC-chip, by sending a READ BINARY command APDU to the NFC chip and subsequently receiving a corresponding response APDU, wherein a value of the Le field of the READ BINARY command APDU is based on the preferred extended length and is greater than 256 bytes and less than 65535 bytes.

Documents with NFCs that support commands according to ISO/IEC 7816 in principle may provide an indication on whether they support extended length (EL) as well as on the length of an R-APDU buffer that may be returned by the NFC. Such information on whether EL is supported may for instance be found in EF.ATR/INFO and/or in ATS historical bytes provided by an NFC.

However, many identity documents have been found to have an NFC chip which indicates in its historical bytes that the NFC chip supports extended length for certain commands, but in reality does not. Similarly, many documents have been found to have an NFC chip which claims to support an R-APDU buffer size which in practice it does not support. As another example, a Javacard may indicate that it supports extended length in ATR/ATS, but individual applets installed on that card may have implemented READ BNARY to only return normal length, i.e. non-extended length, response APDUs. Such incomplete or erroneous information provided by the NFC chip on the READ BINARY extended length support, may cause the terminal, e.g. a smartphone, that comprises an NFC reader, to indicate, in the C-APDU to the NFC chip, an Le field which is larger than is supported by the NFC chip. In turn, this may cause the NFC read to fail, and may even cause the connection between the NFC reader and the NFC chip to fail.

According to the present invention, the terminal determines a document type for an identity document and, based on the determined document type for a specific identity document, the terminal determines a preferred extended length that is supported by the NFC chips of identity documents which are of a same type as the specific document in question. By basing the value of the Le field in command READ BINARY APDU on the preferred extended length, it may be substantially prevented that the terminal attempts to read data from the NFC chip using a READ BINARY C-APDU with an Le value that is not well supported by the NFC chip. Thus, errors during read out of data from the NFC chip may be prevented or their number reduced, resulting in faster reading of data from the NFC chip.

The preferred extended length typically is not stored on the identity document itself, and also typically is not read from the identity document by the terminal. Instead, the preferred extended length may be looked up based on the determined document type, e.g. by checking in a database or table which associates a plurality of document types with information on whether each document type supports extended length, and if so what a preferred extended length for that document type is. Thus, the preferred extended length may be determined independent of whether the terminal has carried out access control with the NFC chip of the identity document. Typically, the value that is based on the preferred extended length will be at least 256 bytes.

The terminal typically comprises a storage, such as an electronic memory, in which such a database or table is stored. In this manner, the terminal can carry out the method without having to communicate with an external server or the like.

The document type of a specific identity document is preferably determined based on information in a Machine-Readable Zone (MRZ) and/or a visual inspection zone (VIZ) of the identity document. Alternatively, the document type may be determined based on other information, such as data regarding a specific identity document that is provided by a server to which the person to which the identity document has been issued has already been identified, or data which is manually input by a person.

In an embodiment said determining, based on the determined document type of the identity document, the preferred extended length for the Le field of the READ BINARY command APDU, is carried out without electronically reading the preferred extended length from the NFC chip and/or without reading the preferred extended length from the identity document.

In an embodiment the step of determining whether the NFC chip of the identity document supports extended length for the READ BINARY command and if so, determining the preferred extended length based on the determined type of the identity document, is based on a look-up operation to determine whether the NFC chip of a document of that document type supports the READ BINARY command, and if so, what a preferred length for the Le field of a READ BINARY command for such an NFC chip is. Such a look-up operation typically comprises searching a table or database which contains tuples of document type, an associated value indicating whether or not NFC chips of documents of that type support extended length READ BINARY command, and if the extended length READ BINARY command is support, what the preferred length for the Le field of a READ BINARY C-APDU is. The preferred length typically will have been determined empirically for each document type, and generally is predetermined. For each document type which supports the extended length READ BINARY command, there will typically be only one preferred extended length.

In an embodiment, determining the type of document comprises using a one-way mapping which has as an input document code, issuing country or organization, date of expiry and date of birth, and which has as an output a document type. By one-way mapping is meant that, a specific identity document (e.g. having a unique document number, or uniquely identifying a person) cannot be determined from a document type. Moreover, for each document type, there will be a plurality of specific identity documents which, when their information is input into the one-way mapping, result in a same document type being output by the one-way mapping.

In an embodiment, step i) is initiated and completed prior to the start of step ii). In an alternative embodiment, step ii) is initiated and completed prior to the start of step i).

In yet another embodiment, step ii) is carried out at least partially in parallel with step i). For instance,

In an embodiment determining the type of identity document comprises the terminal electronically reading data from data group 1 (DG1) from the NFC chip. The identity document will typically comprise an NFC chip which is ICAO Doc 9303 or ISO 18013 compliant, and DG1 of such NFC chips typically contains at least the same data as the printed MRZ of the identity document.

In an embodiment determining the type of identity document comprises electronically reading data from EF.SOd from the NFC chip. In NFC chips of identity documents which are ICAO Doc 9303 compliant, the file EF. SOd, is mandatory for all electronic passports.

In an embodiment determining the type of document is carried out without using a READ BINARY C-APDU which indicates an extended length in the Le field. Thus, the risk of the NFC reader losing its digital connection with the NFC chip due to use of unsupported extended length READ BINARY C-APDU is reduced.

In an embodiment the identity document comprises a machine-readable zone (MRZ), and wherein determining the type of document comprises visually reading an image of the machine-readable zone of the document using optical character recognition. Typically, the terminal will comprise a camera for capturing an image of the MRZ, and a processor for carrying out optical character recognition (OCR) on the captured image of the MRZ. For instance, if the document is ICAO930 compliant, the processor may determine, using OCR of the image of the MRZ, for instance the document code, issuing state or organization, date of expiry, and date of birth as indicated on the MRZ of the identity document, and optionally the document number as well. Based on the document code, issuing state or organization, and date of expiry, a specific document type may be determined. As another example, if the identity document is ISO 18013 compliant, then it may include at least the following information as defined in ISO 18013: document code, issuing country, issuing authority. By itself, or optionally when combined with data read from the NFC chip without using a BINARY READ C-APDU with extended length, a specific document type for an electronic driver's license may be determined.

In an embodiment the document is an identity document conforming to ICAO Doc 9303, in particular ICAO Doc 9309:2021, or is an electronic driver's license conforming to ISO 18013, in particular ISO 18013:2021.

In an embodiment determining the type of document comprises the terminal receiving data on the type of document from a source other than the document, such as a user input or an input that is based on biometrics of the user identified by the document. For instance, an iris scan of the iris of a person identified by the identity document may be used to determine the type of identity document the person is carrying. Alternatively, a person, e.g. a customs officer, may visually inspect the identity document of a person, and, based thereon, manually input data from which the terminal can determine the document type of the person's identity document.

In an embodiment the value that is based on the preferred extended length is greater than half the preferred extended length, and less than twice the preferred extended length, preferably wherein the value based in the preferred extended length differs no more than 10% from the preferred extended length. For instance, if the preferred length has been determined to be 2033 bytes, then the Le value that is transmitted in the C-APDU will be between 1016 and 4066 bytes, preferably between 1829 and 2236 bytes. This allows for some flexibility when choosing which extended length to use, while still reducing the risk of errors.

In an embodiment the value that is based on the preferred extended length is less than or equal to the preferred extended length. In this manner it is ensured that the that is passed in the Le field of the READ BINARY C-APDU does not exceed the preferred extended length.

In an embodiment the value that is based on the preferred extended length differs by no more than 256 bytes from the preferred extended length, preferably by no more than 32 bytes.

In an embodiment the terminal comprises a storage comprising a mapping of document types and corresponding preferred extended lengths, wherein determining, based on the determined type of the identity document, the preferred extended length for the Le field of the READ BINARY command APDU, comprises looking up a preferred extended length which corresponds to the document type in the storage. The storage preferably also comprises, for each of the document types, information on whether the NFC chips of documents of that document type support extended length. For instance, if the preferred extended length indicated in the storage for a specific document type is 256 or less, then it may be inferred that documents of that document type do not support the READ BINARY command with extended length.

In an embodiment the data group that is read in step ii) comprises at least 5000 bytes of data. Typically, the data group that is read comprises biometric data, such as face-image data, fingerprint data and/or iris data for the person to which the identity document has been issued.

In an embodiment the step of obtaining access to the NFC chip using access control, comprises obtaining access to the NFC chip using Password Authenticated Connection Establishment (PACE), Basic Access Control (BAC), Extended Access Control (EAC), or Basic Access Protection (BAP). Usually, in order to read biometric data from the NFC chip, first a form access control has to be carried out. In case the identity document is a driving license according to ISO 18013, the access control will typically entail BAP, e.g. BAP1, BAP2 or BAP3. In case the identity document conforms to ICAO 9303 then the access control will typically be PACE, BAC, or EAC.

In an embodiment the method further comprises, prior to step ii), electronically receiving, by the terminal from the NFC chip, a reported value for an extended length that the NFC chip supports for an extended length BINARY READ command, wherein the preferred extended length is different from the reported value. Thus, the method of the invention may be carried out without relying on extended length values that are reported by the NFC chip.

In an embodiment the method further comprises, after step ii), determining whether a response APDU for the READ BINARY APDU was correctly received, and if not, switching the terminal to read data from the NFC chip using APDU's without extended length. For example, in case a response APDU (R-APDU), that is in response to the READ BINARY C-APDU, indicates an error code, then the terminal be switched to read data from the NFC chip without using any extended length READ BINARY C-APDU's, to reduce the chance of further errors occurring.

In an embodiment the method further comprises, in case step ii) results in an error, a step iii) of using a READ BINARY command APDU, with a value of the Le field less than or equal to 255 bytes, for reading data from the data group of the NFC-chip, and receiving a corresponding response APDU.

In an embodiment the READ BINARY command in step ii) or iii) makes use of command chaining

According to a second aspect, the invention provides a terminal, such as a smart phone, comprising a processor, a memory, and an NFC reader adapted for reading data an NFC chip which supports the READ BINARY command as defined in ISO/IEC 7816, wherein the memory comprises instructions for causing the terminal to carry out the method according to the first aspect of the invention. Preferably, the memory further includes a mapping associating a plurality of document types with information on whether each document type supports extended length, and if so, i.e. if a document type supports the READ BINARY command extended length

In an embodiment the terminal comprises a camera for capturing an image of the MRZ of the identity document.

### Brief description of the drawings

Embodiments of the invention will now be illustrated in the drawings, in which like numerals refer to like features, and in which:
Fig. 1 shows a terminal according to the invention, as well an identity document that can be read by the terminal in accordance with the method of the invention, and an optional server with which the terminal may communicate;
Fig. 2A and 2B respectively show a schematic drawing of a passport from which data may be read in accordance with the invention, and an electronic driver's license from which data may be read in accordance with the invention; and
Fig. 3 schematically shows a flowchart illustrating steps of an embodiment of the method of the present invention.

### Detailed description of the invention

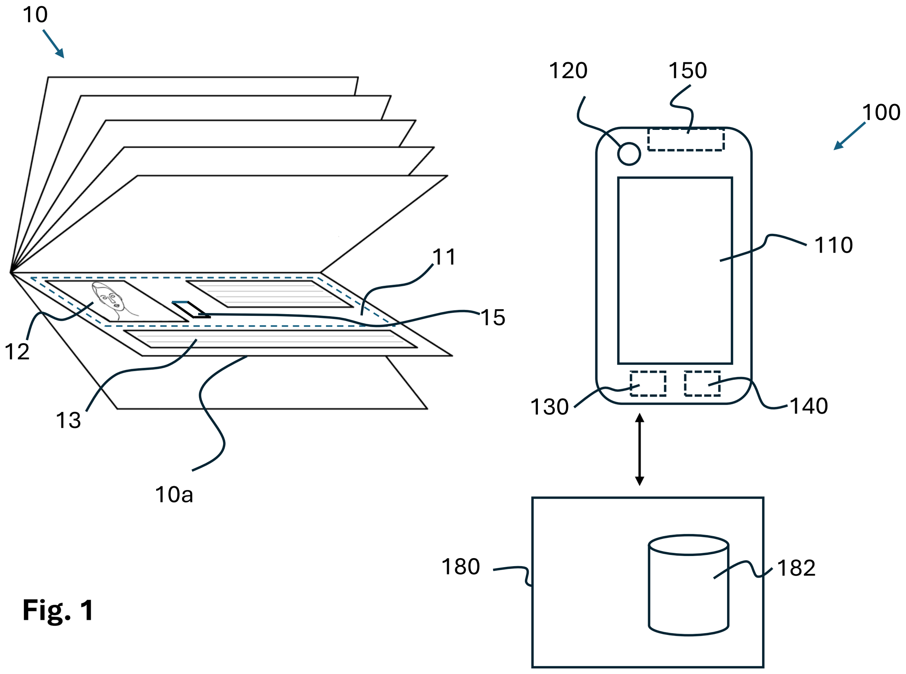

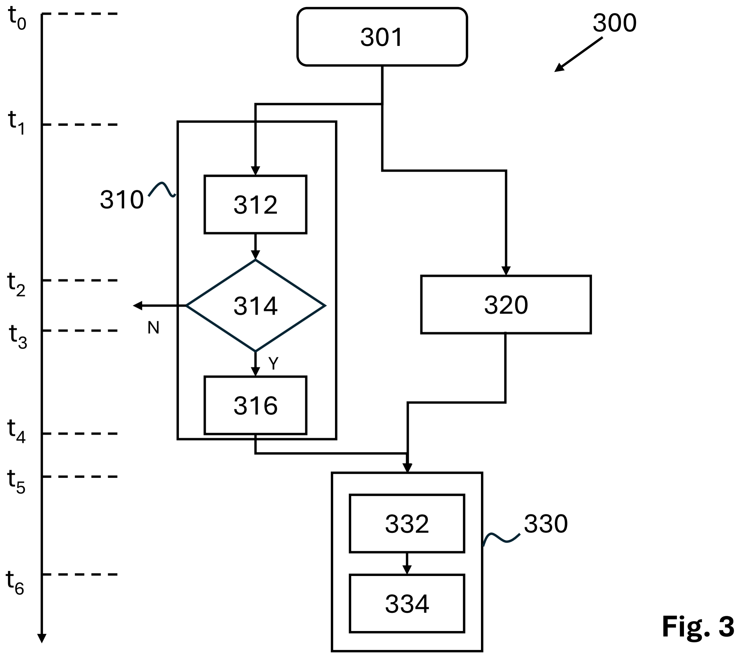

Fig. 1 schematically shows a terminal 100 according to an embodiment of the invention, as well a first identity document 10 in the form of a passport which conforms to ICAO document 9303. The terminal 100 comprises a display 110, a camera 120, a processor 130 and a memory 140 which stores instructions to be executed by the processor 130. The terminal 100 further comprises an NFC reader 150, adapted for reading data from NFC chip 15 of the identity document 10. Further shown is an optional external server 180, comprising a database 182 which stores information on a plurality of document types and associated values of preferred extended lengths that may be used in a READ BINARY C-APDU that the terminal 100 transmits to the NFC chip 15. An example of a table that may be stored in the database will be provided in more detail with reference to Fig. 3

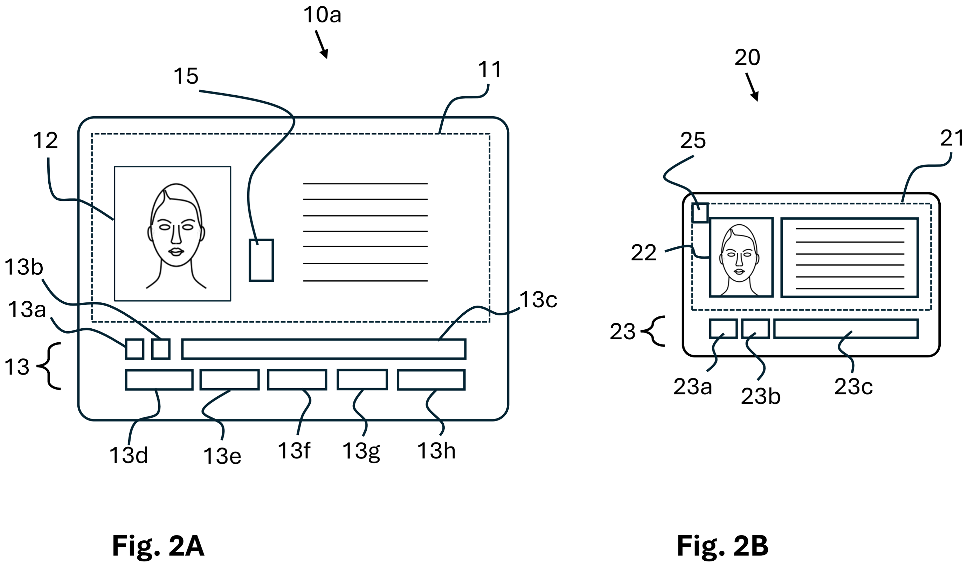

Figs. 2A schematically shows a detail of a single page 10a of the passport 10 of Fig. 1. The page 10a comprises a visual inspection zone (VIZ) 11, which comprises a photograph 12 of the face of a person to which the identity document has been issued. The page 10a of the passport 10 further comprises a machine-readable zone (MRZ) 13 which comprises two lines of data in the form of alphanumeric characters that can be recognized by a machine by means of optical character recognition. The data in the MRZ conforms to ICAO Doc 9303, the first line of the MRZ including a document code 13a, issuing state or organization 13b, and the name of the holder 13c i.e. the name of the person to whom the document has been issued. Data in the second line of the MRZ includes document number 13d, date of birth of the holder 13e, nationality of the holder 13f, date of birth of the holder 13g, date of expiry of the identity document 13h. Though not shown, the MRZ may contain additional data such check digits, sex of the holder and any further optional data. A copy of the data in the MRZ is stored in data group 1 of in the NFC chip 15. Thus, data elements 13a - 13h may be read optically using the camera 120 of the terminal 100, and/or may be read electronically by the terminal by electronically reading out data group 1 from the NFC chip. Based on the document code, issuing state or organization, and date of expiry, a specific document type may be determined, as will be explained in more detail with reference to Fig. 3

Fig. 2B schematically shows a front view of a second identity document 20 in the form of an electronic driver's license which conforms to ISO 18013, and from which can be read using a READ BINARY command in accordance with the method of the invention. The driver's license comprises a VIZ 21, which includes a photo 22 of the face of holder to whom the driver's license has been issued, as well as MRZ 23. The MRZ includes a document code 23a, issuing state or organization 23b, as well optional information 23c which may include the document's date of expiry and the document holder's date of birth in a human-readable or an encoded form. The driver's license further is provided with an NFC chip 25 which stores a copy of the contents of the MRZ in data group 1.

Based on the document code 23a, and issuing state or organization 23b, and optionally further based on the document's date of expiry and document holder's date of birth, a specific document type may be determined, as will be explained in more detail with reference to Fig. 3.

Fig. 3 shows a flowchart of an embodiment 300 of the method of the invention for reading data from an identity document which is provided with an NFC chip which supports the READ BINARY command as defined in ISO/IEC 7816. For instance, document 10 or document 20 of Figs. 2A and 2B each have such an NFC chip. In step 301, a user presents the identity document to the terminal is such a manner that the NFC reader of the terminal can read data from the NFC chip. Next, steps 310-320, 380 and 390 are carried out by the terminal. Step 310 comprises substep 312 of determining a type of the identity document, substep 314 of determining, based on the type of the identity document determined in step 312, whether the NFC chip of the identity document supports extended length for the READ BINARY command. If that is not the case, then the method ends, or optionally continues with a step of reading data from the NFC of the identity document using READ BINARY command APDU's without extended length.
Step 314 typically comprises checking in a table or database which contains information on a plurality of identity document types which each comprise an NFC chip, whether the NFC chip of a document of that type supports the READ BINARY command, and if so, what a preferred length for the Le field of a READ BINARY command for such an NFC chip is.

If in substep 314 it is determined that the NFC chip of the identified document type does support an extended length READ BINARY command, then in substep 316 a preferred extended length of an Le field of the READ BINARY command APDU to be transmitted by the terminal to the NFC chip is determined.

The vertical arrow on the left hand side provides an indication of the order in time in which the steps of the method may be carried out. In the example of Fig. 3, a step 320 of carrying out access control with the NFC chip is carried out while step 310 is being carried out. When both step 310 and step 320 have completed and a preferred extended length for the Le field has been determined, the method continues to step 330 of reading data from the identity document's NFC chip. This entails a substep 332 of sending a READ BINARY command APDU to the NFC chip, wherein a value of the Le field of the READ BINARY command APDU is based on the preferred extended length and is greater than 512 bytes and less than 65535 bytes. After substep 332, the terminal carries out a substep 334 of receiving a corresponding response APDU from the NFC chip. The R-APDU will typically contain a data field of a length equal to or less than the value of the Le field that was used in the READ BINARY C-APDU.

In the example shown, the identity document is presented to the terminal at time t0, and step 310 of the method is initiated at time t1 before step 320 is initiated at time t2, and step 320 runs in parallel with step 310 and completes before step 310 is completed. It is noted however that the order in which steps 310 and 320 are carried out is arbitrary. As long as both steps 310, 320 are completed before initiating step 330 of reading data from the NFC chip, step 330 can be carried out to read data from a data group using extended length. For instance, instead of starting at time t2, step 320 could have started just after time t0 and prior to time t1 at which step 310 was initiated. Similarly, it is conceivable that step 310 completes before step 320 is initiated, or that step 320 completes before step 310 is initiated.

Table 1 below shows examples of a number tuples of document type, an associated Boolean value indicating whether the NFC of that document type supports extended length for READ BINARY, and, if extended length is supported, an associated preferred extended length for that document type.

Each document type will be identical for a multitude of identity documents, e.g. will be the same for at least a thousand identity documents that have been issued, and can be determined based on data that can be obtained from each of those document's MRZs. For instance, substantially all identity documents with a specific document code (e.g. "P" for passport) which were issued by a specific issuing country within a specific time frame, to persons which were adults at the time of issue, may have an identical document type. The actual value of the document type does not matter, as long as it can be derived from data in the visually or electronically accessible MRZ of an identity document, and can be used for identifying documents which have NFC chips which support an extended length READ BINARY with a same preferred extended length. For instance, a document type may be determined based on features of the identity document that may be read optically from the document's MRZ and/or that are read electronically from data group 1 and/or the EF.Sod. In case the document type is determined based on features of the identity document that are read optically from the document's MRZ, this determination of the document type preferably is completed before access control is carried out. The values of Table 1 which indicate whether each specific document type supports extended length for a READ BINARY command, and if so, what the preferred extended length is, have been determined empirically. Though Table 1 shows only 5 examples, it will be appreciated that in practice the table will contain hundreds of 3-tuples which each associate a document type, with whether an NFC of a document of that document type supports extended length for a READ BINARY command, and if so, what the preferred extended length for a READ BINARY command upon which the value of the Le field in the READ BINARY C-APDU is based.

**Table 1.**

| **Document type** | **Supports extended length for READ BINARY?** | **Preferred extended length** |
|---|---|---|
| NLD-A000501 | Yes | 1453 |
| DEU-B011722 | Yes | 2033 |
| NLD-FO-06001 | Yes | 3054 |
| USA-C881101 | Yes | 1893 |
| NLD-T371123 | No | - |
| ... | ... | ... |

Below examples are provided of how the method of the invention may be carried out.

### Example 1:

An identity document in the form of a passport which conforms to ICAO Doc 9303 is presented to the terminal, with the MRZ in view of the terminal's camera and with its NFC chip in reading range of the terminals NFC reader. Using its camera, the terminal obtains an image of the MRZ. The processor of the terminal subsequently carries out OCR on the obtained image. The following information is determined in this manner from the MRZ:

**Table 2**

| Document code | Document number | Issuing country or organisation | Date of expiry | Date of birth |
|---|---|---|---|---|
| "P" | AB12PQRS3 | NLD | 321017 | 850101 |

For documents with document code "P", information on the issuing country or organisation, date of expiry, and date of birth is used to determine the type of the identity document. For instance, it may be known that documents having document code "P" for passport and for which the issuing country is The Netherlands (NLD), and which were issued to persons that are 18 years or older on the current date, are expected to be valid for exactly 10 years from the date of issue. Thus, from the date of expiry of October 17, 2031, it can be calculated by the terminal that the date of issue likely was October 17, 2021. Additionally, it may be known all Dutch passports having document code "P" and which were issued between 30 August 2021 and 14 November 2024, have a same type of NFC chip which supports extended length READ BINARY with a same length. All of this information may be used to provide a one-way mapping of document code, issuing country or organization, date of expiry and date of birth to a document type, e.g. to document type NLD-A000501. The terminal looks up whether NFC chips of identity documents which have this document type support extended length READ BINARY command, and if so, what the preferred extended length for such a READ BINARY command is. For instance, the terminal may comprise a memory or storage in which the information of Table 1 is stored, and may look up in the table whether document type NLA000501 supports extended length READ BINARY, and if so, what the preferred extended length is. It will be appreciated that instead of lookup in a table that is stored in a local storage or memory of the terminal, the terminal could request this information from an external server which comprises a database or the like in which the information from the table is stored.

From Table 1, the terminal determines that documents of type NLD-A000501 support an extended length of up to 1453 bytes. The terminal further executes BAC or PACE protocol based on the document number, date of birth, date of expiry that have been obtained from the MRZ, in order to obtain access to data groups which have protected contents.

As a next step, once access control has been carried out, and the preferred extended length has been determined, data is read from data group DG2 using one or more READ BINARY C-APDU's with an Le value that is based on the preferred extended length. Typically, this entails first reading the Logical Data Structure (LDS) of the NFC chip and selecting DG2, prior to using one or more READ BINARY C-APDU's with an Le value that is based on the preferred extended length to read data from DG2.The Le value will generally be equal to or less than the preferred extended length.

### Example 2:

In this example, the same document as in Example 1 is presented to the NFC reader of the terminal. However, in Example 2, the terminal receives the data of Table 2 from an external source, instead of by means of image capture with the terminal's camera and subsequent OCR processing by the terminal. For instance, a device external to the terminal may capture an image of the MRZ, perform OCR on that image, and transmit data of Table 2 to the terminal. Alternatively, the terminal may capture the image using its camera, then transmit the image to an external device for performing OCR on the MRZ, and receive the data of Table 2 from the external device. In yet another alternative, data from the document's MRZ is stored in an external device, and this device transmits the data to the terminal, to allow the terminal to determine a document type based on that data, as well as for allowing the terminal to carry out access control. In yet another alternative, the terminal receives the relevant data from MRZ based on user input. For instance, the terminal may prompt the user to manually input document code, issuing country, date of birth and date of expiry.

In any case, after the terminal has received the data of Table 2, with the possible exception of the document number, from the external source, the same procedure as described with respect to example 1 is followed for determining whether the identity document supports an extended length READ BINARY command, if so, what the preferred extended length, is, and reading data from DG2.

### Example 3: Determining document type based on data obtained from an external source, and reading data.

An identity document in the form of an electronic driver's license which conforms to ISO 18013 is presented to the terminal, with the MRZ in view of the terminal's camera and with its NFC chip in reading range of the terminals NFC reader. Using its camera, the terminal captures and image of the document's MRZ, and usings its processor performs OCR on the image. The following information is determined in this manner from the MRZ:

**Table 3**

| Document code | Issuing country or organisation | Other information |
|---|---|---|
| "D1" | NLD | 15094962111659VW87Z78NB84 |

Based on the information regarding the document code and the issuing country, it is determined that the document is a Dutch driver's license. Based on this determination, and on the other information that has been read from the MRZ, a document type if determined to be NLD-FO-06001. Next, by looking up this document type in Table 1, it is determined that the document supports extended length, and that the preferred extended length for a READ BINARY command is 3054 bytes. As a next step, biometric data of the driver's license holder is read from data group 6 (DG6) using READ BINARY with an Le field having, in a manner similar in which data is read from datagroup 2 in Example 1.

## Claims

1. Method (300) for a terminal, for reading data from an identity document (10, 20), wherein the identity document comprises an NFC chip which supports the READ BINARY command as defined in ISO/IEC 7816, the method comprising, by the terminal:
i) in arbitrary order:
- a step (310) comprising determining (312) a type of the identity document, and based on the determined type of the identity document, determining (314) whether the NFC chip of the identity document supports extended length for the READ BINARY command and if so, determining (314), based on the determined type of the identity document, a preferred extended length for an Le field of the READ BINARY command APDU to be transmitted by the terminal to the NFC chip;
- a step (320) of carrying out access control with the NFC chip to obtain access to the NFC chip;
ii) after step i), if it is determined that the NFC chip supports extended length for the READ BINARY command:
a step (330) of reading data from a data group of the NFC-chip, by sending (332) a READ BINARY command APDU to the NFC chip and subsequently receiving (334) a corresponding response APDU, wherein a value of the Le field of the READ BINARY command APDU is based on the preferred extended length and is greater than 256 bytes and less than 65535 bytes.

2. Method according to claim 1, wherein said determining (314), based on the determined document type of the identity document, the preferred extended length for the Le field of the READ BINARY command APDU, is carried out without electronically reading the preferred extended length from the NFC chip and/or without reading the preferred extended length from the identity document.

3. Method according to claim 1, wherein determining the type of identity document comprises the terminal electronically reading data from DG1 from the NFC chip.

4. Method according to claim 1, 2 or 3, wherein determining the type of identity document comprises electronically reading data from EF.SOd from the NFC chip.

5. Method according to any one of the preceding claims, wherein determining (310) the type of document is carried out without using an APDU command which indicates extended length in the Le field.

6. Method according to any one of the preceding claims, wherein the identity document comprises a machine-readable zone, and wherein determining the type of document comprises visually reading an image of the machine-readable zone of the document using optical character recognition.

7. Method according to any one of the preceding claims, wherein determining the type of document comprises the terminal receiving data on the type of document from a source other than the document, such as a user input or an input that is based on biometrics of the user identified by the document.

8. Method according to any one of the preceding claims, wherein the value that is based on the preferred extended length is greater than half the preferred extended length, and less than twice the preferred extended length, preferably wherein the value based in the preferred extended length differs no more than 10% from the preferred extended length.

9. Method according to any one of claims 1-7, wherein the value that is based on the preferred extended length is less than or equal to the preferred extended length.

10. Method according to any one of the preceding claims, wherein the data group that is read in step ii) comprises at least 5000 bytes of data.

11. Method according to any one of the preceding claims, wherein the step of obtaining (140) access to the NFC chip using access control, comprises obtaining access to the NFC chip using Password Authenticated Connection Establishment (PACE), Basic Access Control (BAC), Extended Access Control (EAC), or Basic Access Protection (BAP).

12. Method according to any one of the preceding claims, further comprising, prior to step ii), electronically receiving, by the terminal from the NFC chip, a reported value for an extended length that the NFC chip supports for an extended length BINARY READ command, wherein the preferred extended length is different from the reported value.

13. Method according to any one of the preceding claims, further comprising, after step ii), determining whether a response APDU for the READ BINARY APDU was correctly received, and if not, switching the terminal to read data from the NFC chips using APDU's without extended length.

14. Method according to any one of the preceding claims, further comprising, in case step ii) results in an error, a step iii) of using (180) a READ BINARY command APDU, with a value of the Le field less than or equal to 255 bytes, for reading data from the data group of the NFC-chip, and receiving (190) a corresponding response APDU, preferably wherein the READ BINARY command in step ii) or iii) makes use of command chaining.

15. Terminal comprising a processor, a memory, and an NFC reader adapted for reading data an NFC chip which supports the READ BINARY command as defined in ISO/IEC 7816, wherein the memory comprises instructions for causing the terminal to carry out the method according to any one of claims 1-14, preferably wherein the terminal comprises a camera for capturing an image of the MRZ of the identity document.
